# EUROPÄISCHE PATENTSCHRIFT

(11) **EP 0 881 974 B1**
(45) Veröffentlichungstag und Bekanntmachung des Hinweises auf die Patenterteilung: **19.06.2002**
(21) Anmeldenummer: 97941866.2
(22) Anmeldetag: 04.09.1997
(51) Int. Cl.: B60T 8/26

(54) **VERFAHREN UND VORRICHTUNG ZUR STEUERUNG DER BREMSKRAFTVERTEILUNG BEI EINEM FAHRZEUG**
PROCESS AND DEVICE FOR CONTROLLING THE BRAKING FORCE DISTRIBUTION IN A VEHICLE
PROCEDE ET DISPOSITIF DE COMMANDE DE LA REPARTITION DE LA FORCE DE FREINAGE DANS UN VEHICULE

(30) Priorität: 11.12.1996 DE 19651460
(43) Veröffentlichungstag der Anmeldung: 09.12.1998
(73) Patentinhaber: ROBERT BOSCH GMBH, 70442 Stuttgart (DE)
(72) Erfinder: PRUHS, Uwe, D-74321 Bietigheim-Bissingen (DE); DIEHLE, Stefan, D-70825 Korntal-Münchingen (DE); MEIER, Thomas, D-74199 Untergruppenbach (DE)
(86) Internationale Anmeldenummer: DE9701940
(87) Internationale Veröffentlichungsnummer: WO9825805

(56) Entgegenhaltungen:
- EP-A- 0 509 237
- DE-A- 3 301 948
- DE-A- 3 306 611
- DE-A- 3 829 951

## Beschreibung

### Stand der Technik

Die Erfindung betrifft ein Verfahren und eine Vorrichtung zur Steuerung der Bremskraftverteilung bei einem Fahrzeug gemäß den Oberbegriffen der unabhängigen Patentansprüche.

Ein derartiges Verfahren bzw. eine derartige Vorrichtung ist beispielsweise aus der EP-B1 509 237 (US-Patent 5 281 012) bekannt. Dort wird die Differenz zwischen dem schnellsten Vorderrad und dem langsamsten Hinterrad gebildet und der Bremsdruck an den Hinterrädern derart eingestellt, daß die Geschwindigkeitsdifferenz zwischen dem schnellsten Vorderrad und dem langsamsten Hinterrad im wesentlichen einen vorgegebenen Wert einnimmt. Bei Bremsungen in Kurven kann der Hinterachsbremsdruck wegen der größer werdenden Geschwindigkeitsdifferenz bis auf Null reduziert werden. Daher ist bei der bekannten Lösung vorgesehen, den Hinterachsbremsdruck auf einen vom Kurvenradius abhängigen Minimalwert zu begrenzen und den vorgegebenen Wert für die Geschwindigkeitsdifferenz an die Fahrzeuggeschwindigkeit anzupassen.

Obwohl diese Lösung die Problematik der Kurvenbremsung zufriedenstellend löst, hat es sich gezeigt, daß sie in einigen Fällen, insbesondere bei hohen Kurvengeschwindigkeiten Einschränkungen im Fahrverhalten aufweist, da kein zum Fahrzeuggiermoment gegendrehendes Bremsmoment erzeugt wird.

Es ist daher Aufgabe der Erfindung, eine elektronische Bremskraftverteilungsregelung bei Kurvenbremsungen zu verbessern.

Dies wird durch die kennzeichnenden Merkmale der unabhängigen Patentansprüche erreicht.

### Vorteile der Erfindung

Die erfindungsgemäße Lösung verbessert eine elektronische Bremskraftverteilungsregelung bei Kurvenbremsungen.

Besonders vorteilhaft ist, daß im Teilbremsgebiet die Neigung zum Übersteuern bei Bremsungen nahe an der Kurvengrenzgeschwindigkeit außerhalb des ABS-Regelbereichs durch das durch die erfindungsgemäße Lösung dem Giermoment entgegengerichtete Bremsmoment abnimmt.

Vorteilhaft ist ferner, daß die erfindungsgemäße Bremskraftverteilungsregelung auch im fahrdynamisch kritischen Bereich bei hohen Kurvengeschwindigkeiten (größer als 60 bis 120 km/h) aufrechterhalten wird.

Vorteilhaft ist ferner, daß das durch die Bremsensteuerung erzeugte gegendrehende Moment nicht ruckartig aufgebaut wird, sondern mit Anwachsen des vom Fahrer vorgegebenen Bremsdrucks zur Verfügung steht. Das Fahrzeug wird bei erheblichen Vorteilen im Komfort dennoch ausreichend stabilisiert.

Ferner ist in vorteilhafter Weise die erfindungsgemäße Lösung sehr anpassungsfähig an unterschiedliche Fahrzeuge (Sportwagen, Limousinen, Transporter, etc.), da nach dem Bremskraftverteilungsdiagramm (adaptives Verhalten) geregelt wird.

In vorteilhafter Weise wird durch die Individualregelung der Hinterachse gegenüber der bekannten Select-Low-Regelung nur das halbe Druckvolumen verschoben. Dies bewirkt eine für den Fahrer deutlich spürbare Komforterhöhung bei den Druckaufbauten über den gesamten Geschwindigkeitsbereich.

Ferner ist vorteilhaft, daß keine zusätzliche Hardware zu den bekannten ABS-Systemen (4-Kanal) notwendig ist.

In besonders vorteilhafter Weise wird die erfindungsgemäße Lösung nicht nur bei hydraulischen Bremsanlagen, sondern auch bei pneumatischen, bei elektrisch gesteuerten hydraulischen und pneumatischen Bremsanlagen sowie bei Bremsanlagen mit elektromotorischer Zuspannung angewendet.

Weitere Vorteile ergeben sich aus der nachfolgenden Beschreibung von Ausführungsbeispielen bzw. aus den abhängigen Patentansprüchen.

### Zeichnung

Die Erfindung wird nachstehend anhand der in der Zeichnung dargestellten Ausführungsformen näher erläutert. Dabei zeigt Figur 1 ein Übersichtsblockschaltbild einer Steuereinrichtung zur Steuerung der Radbremsen. Figur 2 zeigt ein Flußdiagramm, welches ein Realisierungsbeispiel einer elektronischen Bremskraftverteilungsregelung gemäß der erfindungsgemäßen Vorgehensweise als Rechnerprogramm skizziert. In Figur 3 ist ein erstes Ausführungsbeispiel der Bremskraftverteilungsregelung während Kurvenfahrt dargestellt, dessen Wirkung anhand des Zeitdiagramms nach Figur 4 verdeutlicht ist. Ein zweites Ausführungsbeispiel für die Bremskraftverteilungsregelung während einer Kurvenfahrt ist in Figur 5 dargestellt, dessen Wirkung entsprechend im Zeitdiagramm nach Figur 6 dargestellt ist. Figur 7 zeigt ein Flußdiagramm, welches die herkömmliche Bremskraftverteilungsregelung während einer Geradeausfahrt beschreibt. In Figur 8 schließlich sind die am Fahrzeug angreifenden Kräfte und Momente bei Geradeaus- und Kurvenfahrt dargestellt.

### Beschreibung von Ausführungsbeispielen

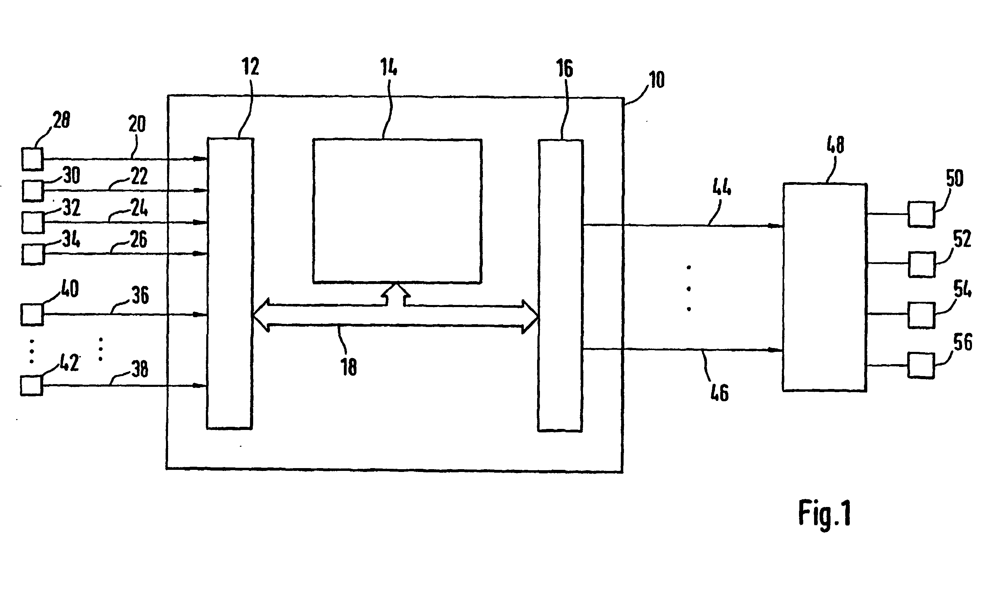

In Figur 1 ist eine Steuereinrichtung zur Steuerung der Bremsanlage eines Fahrzeugs dargestellt. Die Steuereinheit 10 umfaßt eine Eingangsschaltung 12, wenigstens einen Mikrocomputer 14 und eine Ausgangsschaltung 16. Diese Elemente sind über ein Bussystem 18 zum gegenseitigen Datenaustausch miteinander verbunden. Der Eingangsschaltung 12 werden die Eingangsleitungen 20, 22, 24 und 26 von Raddrehzahlsensoren 28, 30, 32 und 34 zugeführt. Ferner werden ihr Eingangsleitungen 36 bis 38 von Meßeinrichtungen 40 bis 42 zugeführt. Letztere erfassen weitere Betriebsgrößen des Fahrzeugs, der Bremsanlage oder der Antriebseinheit, die zur Steuerung der Bremsanlage ausgewertet werden. Über Ausgangsleitungen 44 bis 46, die von der Ausgangsschaltung 16 ausgehen, beeinflußt die Steuereinheit 10 über entsprechende Stelleinrichtungen 48 die Radbremsen 50, 52, 54 und 56. Im bevorzugten Ausführungsbeispiel handelt es sich bei der Bremsanlage um eine hydraulische Bremsanlage, wobei die Stelleinrichtungen 48 die aus herkömmlichen ABS- oder ABSR-Systemen bekannten Ventileinrichtungen umfassen. Entsprechend ist in einem anderen Ausführungsbeispiel eine pneumatische Bremsanlage vorgesehen, wobei die Stelleinrichtungen 48 auch hier die aus ABS- bzw. ABSR-Systemen oder elektro-pneumatischen Bremsanlagen bekannten Ventileinrichtungen umfassen. Die erfindungsgemäße Lösung wird in vorteilhafter Weise auch bei Bremsanlagen mit elektrischer Zuspannung eingesetzt. In diesem Fall umfassen die Stelleinrichtungen 48 Elektromotoren, die von der Steuereinheit 10 im Rahmen von radindividuellen Regelkreisen (Strom, Bremskraft, Bremsmoment, etc.) angesteuert werden.

Die Steuereinrichtung 10, dort der Mikrocomputer 14, umfaßt Programme, die neben den herkömmlichen Funktionen wie ABS, ASR etc. auch die Bremskraftverteilung zwischen Vorder- und Hinterachse des Fahrzeugs regeln. Dabei wird zwischen Geradeausfahrt und Kurvenfahrt unterschieden. Die Kurvenerkennung erfolgt dabei mit aus dem Stand der Technik bekannten Vorgehensweisen. Zum einen kann eine Kurvenfahrt durch Auswerten eines Lenkwinkelsensors, eines Querbeschleunigungssensors und/oder eines Gierratesensors ermittelt werden, andererseits durch bekannte Maßnahmen aus der Drehzahldifferenz der Fahrzeugräder. Wird Geradeausfahrt erkannt, so wird die aus dem Technik bekannte Regelung der Hinterachse nach dem Select-Low-Prinzip durchgeführt. Dies bedeutet, daß der Hinterachsbremsdruck nach Maßgabe der Differenz zwischen dem schnellsten Vorderrad und dem langsamsten Hinterrad beeinflußt wird. Dadurch werden beispielsweise durch Bodenstörungen hervorgerufene, einseitige Druckabbauten in der Hinterachse verhindert. Das durch einseitige Druckabbauten entstehende Giermoment, welches zu einer Destabilisierung des Fahrzeugs führen kann, wird somit verhindert. Im Gegensatz dazu wird bei erkannter Kurvenfahrt eine andere Regelstrategie verfolgt, indem die Hinterräder radindividuell geregelt werden. Es wird die Differenzgeschwindigkeit zwischen jeder Hinterraddrehzahl und der Geschwindigkeit des schnellsten Vorderrades gebildet und die Hinterachsbremsdrücke derart eingestellt, daß ein bestimmter Grenzwert eingehalten wird.

Durch die radindividuelle Regelung an der Hinterachse während einer Kurvenfahrt werden die eingangs genannten Vorteile, insbesondere das dem Giermoment entgegendrehende Bremsmoment, erreicht. Die Kombination dieser Maßnahmen führt zu einem verbesserten Bremsverhalten und zu einem Gewinn an Stabilität bei Geradeausfahrt und bei Kurvenfahrt.

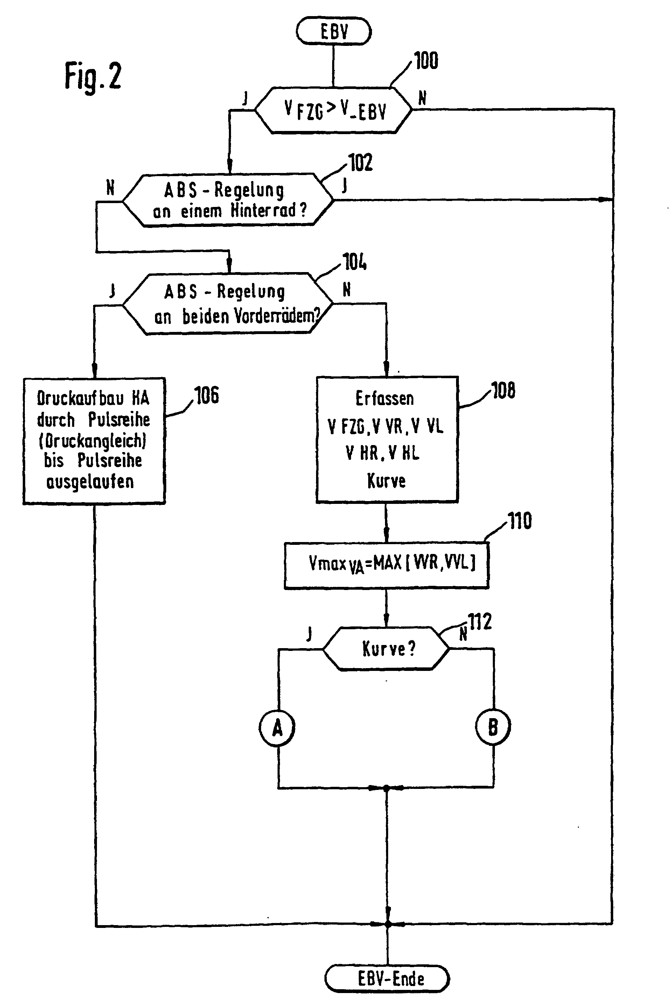

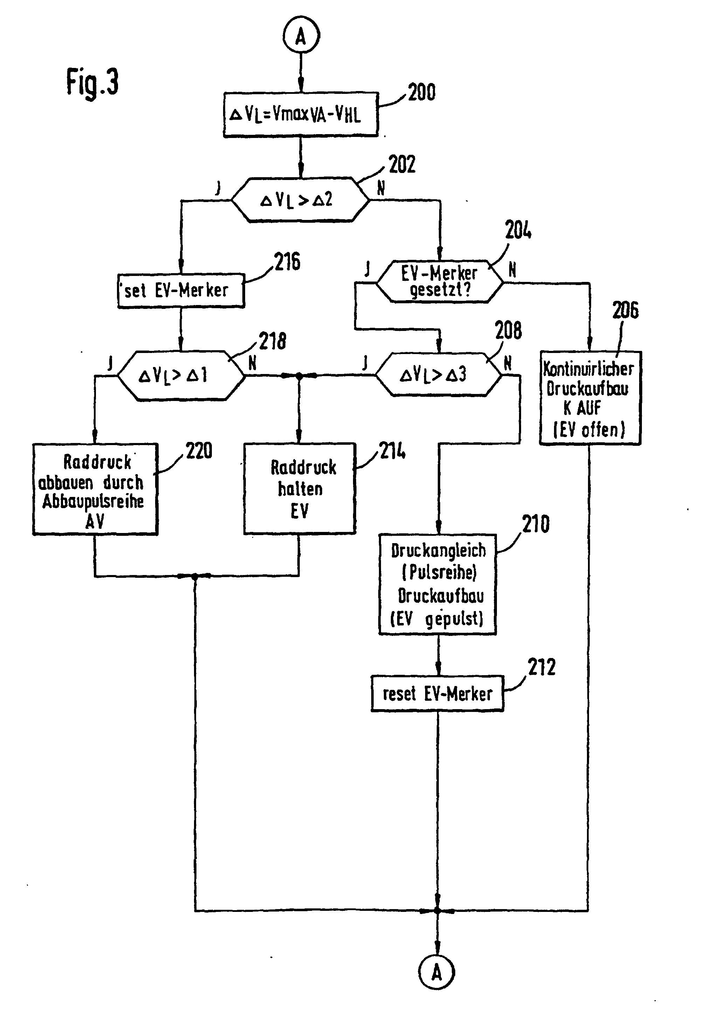

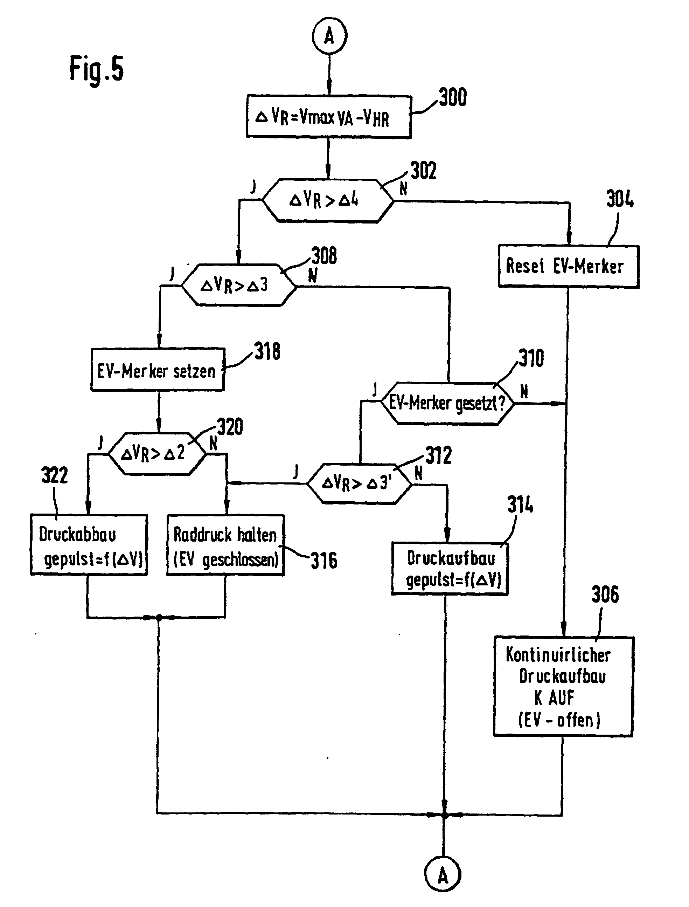

Im bevorzugten Ausführungsbeispiel wird die erfindungsgemäße Lösung im Rahmen von Programmen des Mikrocomputers 14 realisiert. Figur 2 zeigt ein Flußdiagramm, welches die grundsätzliche Struktur des Programms zur Regelung der Bremskraftverteilung zwischen Vorder- und Hinterachse skizziert. Nach Start des Programms wird im ersten Schritt 100 überprüft, ob die Fahrzeuggeschwindigkeit VFZG einen vorbestimmten Grenzwert V_EBV (z.B. 3 km/h) überschritten hat. Überschreitet die Fahrgeschwindigkeit den vorgegebenen Schwellwert V_EBV nicht, wird das Programm beendet und zu vorgegebener Zeit erneut durchlaufen. Hat Schritt 100 ergeben, daß die Fahrzeuggeschwindigkeit größer als die Mindestregelgeschwindigkeit V_EBV ist, wird im darauffolgenden Schritt 102 anhand gesetzter Marken überprüft, ob ein Hinterrad sich in der ABS-Regelung befindet. Ist dies der Fall, wird die Regelung der Bremskraftverteilung nicht durchgeführt, das Programm beendet und zu vorgegebener Zeit erneut durchlaufen. Befindet sich kein Hinterrad in der ABS-Regelung, wird im Schritt 104 abgefragt, ob beide Vorderräder sich in ABS-Regelung befinden. Ist dies der Fall, wird im Schritt 106 Druck an der Hinterachse durch eine vorgegebene Pulsreihe aufgebaut, um den Druck an den Hinterrädern den an den Vorderrädern anzugleichen. Nach Schritt 106 wird das Programm beendet und zu vorgegebener Zeit erneut durchlaufen. Sind nicht beide Vorderräder in der ABS-Regelung, werden im Schritt 108 die zur Durchführung der Regelung notwendigen Größen eingelesen: Fahrgeschwindigkeit VFZG, Geschwindigkeit des rechten Vorderrades VVR, Geschwindigkeit des linken Vorderrades VVL, Geschwindigkeit des linken Hinterrades VHL, Geschwindigkeit des rechten Hinterrades VHR sowie die Information, ob eine Kurvenfahrt vorliegt. Im darauffolgenden Schritt 110 wird die schnellste Vorderradgeschwindigkeit VmaxVA als Maximalwertauswahl der Geschwindigkeiten des rechten und linken Vorderrades ermittelt. Daraufhin wird im Schritt 112 überprüft, ob sich das Fahrzeug in einer Kurvenfahrt befindet. Ist dies nicht der Fall, wird zur Steuerung des Hinterachsbremsdrucks bei Geradeausfahrt der in Figur 7 skizzierte Programmteil eingeleitet. Befindet sich das Fahrzeug auf einer Kurvenfahrt, wird der in Figur 3 oder 5 dargestellte Programmteil eingeleitet. Nach der Steuerung des Hinterachsbremsdruck gemäß den Programmteilen nach den Figuren 3, 5 oder 7 wird das Programm beendet und zu vorgegebener Zeit erneut durchlaufen.

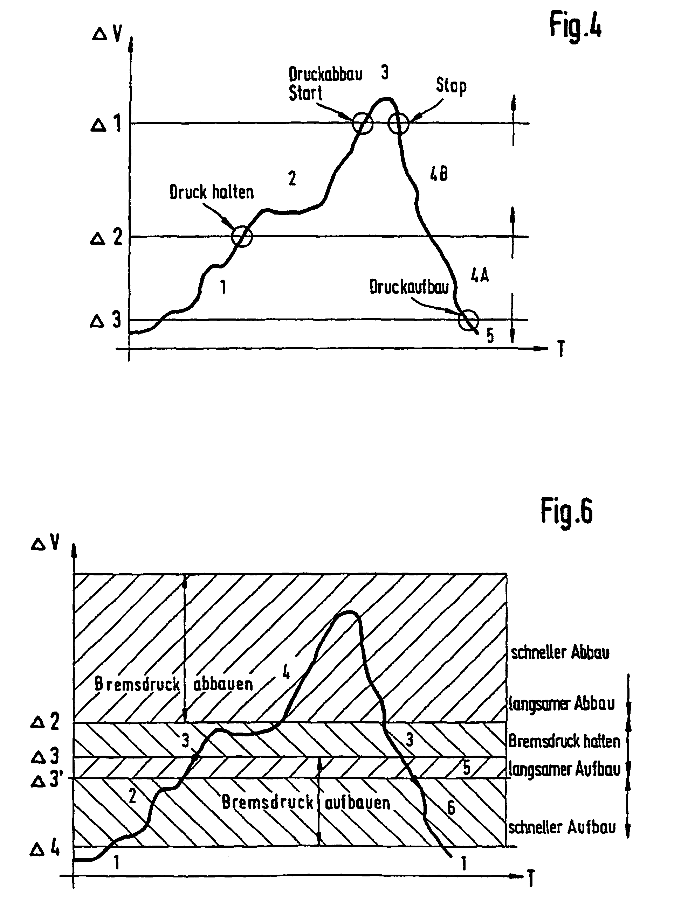

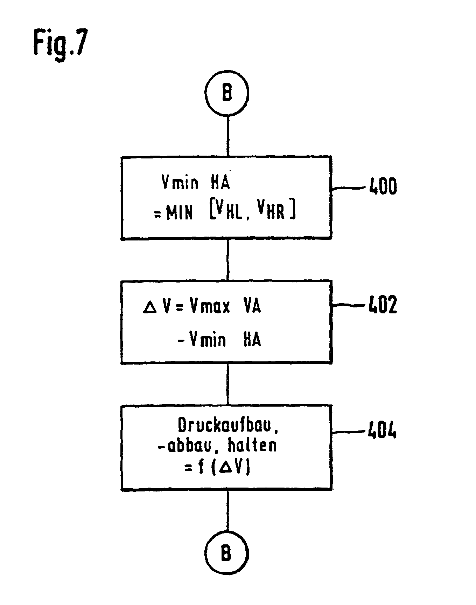

Die Steuerung des Bremsdrucks in den Hinterachsbremsen bei einer Kurvenfahrt ist im Rahmen eines ersten Ausführungsbeispiels in Figur 3 und 4 dargestellt. Die Hinterachsbremsen werden einzeln im Verhältnis zu den Vorderrädern geregelt. Überschreitet die Differenz zwischen der Geschwindigkeit eines Hinterrads und dem schnellsten Vorderrad einen bestimmten Grenzwert, wird der Druck in diesem Hinterrad begrenzt. Wird ein zweiter Grenzwert oberhalb des ersten Grenzwertes überschritten, so erfolgt eine Abbaupulsreihe. Die Abbaupulsreihe läuft so lange, bis der zweite Grenzwert wieder unterschritten wird. Ein Druckaufbau erfolgt nach Unterschreiten des ersten Grenzwertes abzüglich einer Hysterese.

Eine bevorzugte Realisierungsform dieser Vorgehensweise ist am Beispiel des linken Hinterrades in Figur 3 skizziert. Ein entsprechender Programmteil wird für das rechte Hinterrad durchlaufen. Im ersten Schritt 200 wird die Differenzgeschwindigkeit ΔVL zwischen der Geschwindigkeit des schnellsten Vorderrades VmaxVA und der Geschwindigkeit VHL des linken Hinterrades gebildet. Im darauffolgenden Schritt 202 wird überprüft, ob die Differenzgeschwindigkeit größer als ein Grenzwert Δ2 ist. Ist dies nicht der Fall, wird im Schritt 204 überprüft, ob der EV-Merker gesetzt ist. Die Bedeutung dieses Merkers wird weiter unten beschrieben. Ist der Merker nicht gesetzt, d.h. befindet sich das System im aufsteigenden Teil der Kurve nach Figur 4 unterhalb der Schwelle Δ3 (Bereich 1), wird kontinuierlich gemäß Schritt 206 Druck aufgebaut. Dies erfolgt im bevorzugten Ausführungsbeispiel einer hydraulischen Bremsanlage dadurch, daß das Einlaßventil der entsprechenden Radbremse offen ist. Nach Schritt 206 wird gemäß Figur 2 fortgefahren.

Hat Schritt 204 ergeben, daß der Merker gesetzt ist, d.h. daß die Schwelle Δ2 bereits überschritten war, wird im darauffolgenden Schritt 208 abgefragt, ob die Differenzgeschwindigkeit größer als Δ3 ist, der betragsmäßig kleiner als Δ2 ist. Ist die Differenzgeschwindigkeit kleiner oder gleich Δ3, d.h. ist sie unter diesen Wert gefallen (Bereich 5 in Figur 4), wird gemäß Schritt 210 zum Druckangleich an den Bremsdruck an den Vorderrädern durch gepulste Ansteuerung des Einlaßventils mit einer vorgegebenen Pulsreihe Druck aufgebaut und im folgenden Schritt 212 der Merker zurückgesetzt. Nach Schritt 212 wird gemäß Figur 2 fortgefahren.

Ist die Differenzgeschwindigkeit größer als Δ3 (Bereich 4A in Figur 4) wird gemäß Schritt 214 durch Schließen des Einlaßventils der Druck gehalten. Nach Schritt 214 wird gemäß Figur 2 fortgefahren.

Hat Schritt 202 ergeben, daß die Differenz den Grenzwert Δ2 überschreitet, wird im Schritt 216 der Merker gesetzt. Daraufhin wird im Abfrageschritt 218 überprüft, ob die Differenz einen betragsmäßig größeren Grenzwert Δ1 überschreitet.

Ist dies nicht der Fall (Bereich 2 oder 4B in Figur 4), wird der Bremsdruck gemäß Schritt 214 gehalten. Wurde im Schritt 218 festgestellt, daß die Differenz größer als der Grenzwert Δ1 ist (Bereich 3 in Figur 4), wird im darauffolgenden Schritt 220 Bremsdruck abgebaut. Dies erfolgt in bevorzugtem Ausführungsbeispiel durch Ansteuern des entsprechenden Auslaßventils mit Pulsen vorgegebener Länge. Nach den Schritt 220 wird gemäß Figur 2 fortgefahren.

Die Wirkungsweise des in Figur 3 dargestellten Ausführungsbeispieles ist im Zeitdiagramm nach Figur 4 verdeutlicht. Dabei wird der Verlauf der Geschwindigkeitsdifferenz ΔV über der Zeit dargestellt. Zunächst befindet sich die Geschwindigkeitsdifferenz unterhalb des Grenzwertes Δ3. Dies bedeutet, daß durch das offene Einlaßventil Druck aufgebaut wird. Entsprechend erhöht sich die Geschwindigkeitsdifferenz, bis der zweite Schwellwert Δ2 überschritten wird. In diesem Fall wird gemäß der vorstehend dargestellten Beschreibung der Bremsdruck gehalten, indem Einlaß- und Auslaßventil geschlossen sind. In dem in Figur 4 dargestellten Beispiel steigt die Differenz weiter an. Zu einem bestimmten Zeitpunkt überschreitet die Differenz den obersten Grenzwert Δ1. Dies führt zu einem gepulsten Druckabbau durch Ansteuern des Auslaßventils. Die Geschwindigkeitsdifferenz nimmt ab. Bei erneutem Unterschreiten des Grenzwertes Δ1 wird der Druckabbau gestoppt und der Bremsdruck gehalten. Die Haltephase des Bremsdrucks dauert bis zum erneuten Unterschreiten des Schwellwertes Δ3. Wird dieser Schwellwert unterschritten, so wird durch Öffnen des Einlaßventils Druck wieder aufgebaut.

Durch die beschriebene Vorgehensweise wird für jedes Rad getrennt während einer Kurvenfahrt die Bremsdrücke an den Hinterachsbremsen nach Maßgabe der Differenz zwischen der Geschwindigkeit des jeweiligen Hinterrades und des schnellsten Vorderrades eingestellt.

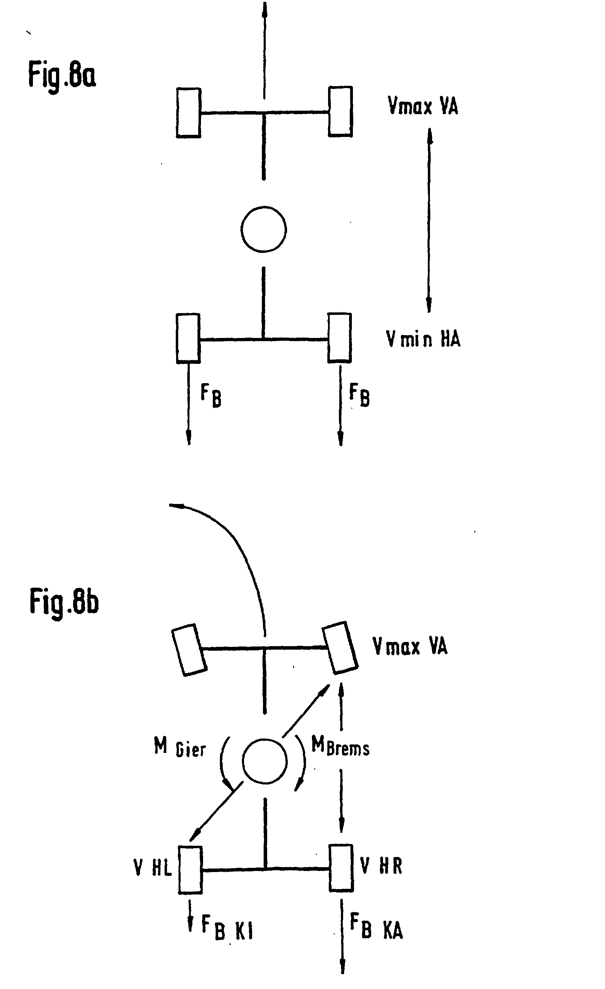

Im Rahmen eines zweiten Ausführungsbeispiels, welches in den Figuren 5 und 6 dargestellt ist, werden statt festen Schwellwerten eine dynamische Regelung in einem Schlupfband eingesetzt. Dazu wird in einem vorgegebenen Band der Geschwindigkeitsdifferenz der Raddruck gehalten. Unterhalb dieses Bandes erfolgt ein Aufbau, oberhalb ein Abbau. Aufbau und Abbau sind dabei dynamisch, d.h. je weiter sich die Regelgröße (Geschwindigkeitsdifferenz) im Druckaufbau - oder im Druckabbau befindet, desto schneller erfolgt der entsprechende Druckaufbau bzw. - abbau.

In Figur 5 ist ein Flußdiagramm dargestellt, welches eine Realisierung des zweiten Ausführungsbeispiels als Rechnerprogramm beschreibt. Das Flußdiagramm in Figur 5 ist am Beispiel eines rechten Hinterrades dargestellt. Ein entsprechender Programmteil existiert auch für das linke Hinterrad. Im ersten Schritt 300 wird die Geschwindigkeitsdifferenz ΔVR zwischen dem schnellsten Vorderrad VmaxVA und der Geschwindigkeit des rechten Hinterrades VHR berechnet. Im ersten Abfrageschritt 302 wird überprüft, ob die Geschwindigkeitsdifferenz den betragsmäßig kleinsten Grenzwert Δ4 überschreitet. Ist dies nicht der Fall (Bereich 1 in Figur 6), wird gemäß Schritt 304 ein nachfolgend beschriebener Merker zurückgesetzt und im Schritt 306 kontinuierlich Druck durch das offene Einlaßventil aufgebaut. Danach mit dem Programm nach Figur 2 fortgefahren. Ist die Geschwindigkeitsdifferenz größer als der Grenzwert Δ4, wird im Abfrageschritt 308 überprüft, ob sie größer als der Grenzwert Δ3 ist. Ist dies nicht der Fall, d.h. befindet sich die Geschwindigkeitsdifferenz zwischen den Grenzwerten Δ3 und Δ4, wird im Schritt 310 überprüft ob der Merker gesetzt ist. Ist er nicht gesetzt, befindet sich das System im Bereich steigender Differenz (vgl. Bereich 2 in Figur 6), so daß Druck gemäß Schritt 306 aufgebaut wird.

Ist der Merker gesetzt, d.h. fällt die Differenz ab, wird im Schritt 312 abgefragt, ob die Geschwindigkeitdifferenz größer als der Schwellwert Δ3', der etwas unterhalb des Schwellwerts Δ3 liegt, ist. Ist dies nicht der Fall (Bereich 6 in Figur 6), wird im Schritt 314 Druck durch gepulstes Ansteuern des Einlaßventils aufgebaut. Die Pulslängen sind abhängig vom Wert der Geschwindigkeitsdifferenz. Sie nehmen mit steigender Geschwindigkeitsdifferenz ab. Dies bedeutet, daß der Druckaufbau langsamer wird, je größer die Geschwindigkeitsdifferenz wird und je näher die Geschwindigkeitsdifferenz an das Sollwertband geführt wird. Danach wird mit dem Programm nach Figur 2 fortgefahren.

Ist die Geschwindigkeitdifferenz gemäß Schritt 312 größer als der Schwellwert Δ3' (Bereich 5 in Figur 6), wird im Schritt 316 der Raddruck gehalten. Einlaß- und Auslaßventil sind dabei geschlossen. Danach wird mit dem Programm nach Figur 2 fortgefahren.

Hat die Geschwindigkeitsdifferenz auch den Grenzwert Δ3 überschritten (Schritt 308, Bereiche 3 und 4 in Figur 6), wird gemäß Schritt 318 der Merker gesetzt. Darauf wird im Schritt 320 überprüft, ob die Geschwindigkeitsdifferenz den Grenzwert Δ2 überschreitet. Ist dies nicht der Fall, befindet sich die Geschwindigkeitsdifferenz im vorgegebenen Sollwertband (Bereich 3 in Figur 6), so wird gemäß Schritt 316 der Druck gehalten. Hat die Geschwindigkeitsdifferenz den Schwellwert Δ2 überschritten, wird im darauffolgenden Schritt 322 Druck abgebaut. Dies erfolgt dadurch, daß ein Auslaßventil mit Pulsen vorgegebener Länge angesteuert wird. Auch hier sind die Pulslängen abhängig vom Wert der Geschwindigkeitsdifferenz, wobei hier mit größer werdender Geschwindigkeitsdifferenz die Pulslängen größer werden. Dies bedeutet, daß mit größer werdender Geschwindigkeitsdifferenz der Bremsdruckabbau schneller erfolgt, während er in der Nähe des Sollwertbandes langsamer durchgeführt wird. Danach wird mit dem Programm nach Figur 2 fortgefahren.

Die Grenzwert Δ2 und Δ3 fallen in einem Ausführungsbeispiel zusammen, so daß dort kein Sollwertband, sondern ein fester Sollwert vorgegeben wird. Der Grenzwert Δ3' bildet eine Hysterese zwischen an- und absteigender Differenz. In einem Ausführungsbeispiel wird auf diese Hysterese verzichtet, so daß der Grenzwert Δ3' mit dem Wert Δ3 zusammenfällt.

Die Wirkungsweise des zweiten Ausführungbeispiels der erfindungsgemäßen Lösung ist im Zeitdiagramm nach Figur 6 verdeutlicht. Auch hier ist der Verlauf der Geschwindigkeitsdifferenz über der Zeit aufgetragen. Zunächst sei die Geschwindigkeitsdifferenz unterhalb des Grenzwertes Δ3. Der Bremsdruckaufbau erfolgt dabei schnellstmöglich, indem das Einlaßventil vollständig geöffnet ist. Dadurch nimmt die Geschwindigkeitsdifferenz zwischen Vorder- und Hinterrad zu. Nach Überschreiten des Grenzwertes Δ3 tritt die Geschwindigkeitsdifferenz in den Sollbereich ein, so daß durch Schließen von Einlaß- und Auslaßventil der Bremsdruck gehalten wird. Überschreitet die Geschwindigkeitsdifferenz den oberen Grenzwert Δ2 des Sollbandes, wird Bremsdruck abgebaut. Durch gepulstes Ansteuern des Auslaßventils wird der Bremsdruckabbau mit zunehmender Radgeschwindigkeitsdifferenz schneller. Dabei kann die Pausenzeit zwischen den Pulsen nahezu Null werden, so daß das Auslaßventil ständig geöffnet sein kann. Bei erneutem Unterschreiten des Grenzwertes Δ2 nach Absinken der Geschwindigkeitsdifferenz wird der Druck gehalten. Bei Unterschreiten des Grenzwertes Δ3' wird Druck wieder aufgebaut. Der Druckaufbau wird mit abnehmender Geschwindigkeitsdifferenz schneller. Bei Unterschreiten des Grenzwertes Δ4 wird bei offnem Einlaßventil der Bremsdruckaufbau schnellstmöglich vorgenommen.

Die aus dem Stand der Technik bekannte Vorgehensweise bei Geradeausfahrt ist als Flußdiagramm in Figur 7 dargestellt. Dort wird im ersten Schritt 400 das langsamste Hinterrad durch eine Minimalwertauswahl der Geschwindigkeiten des linken und des rechten Hinterrades ausgewählt. Im darauffolgenden Schritt 402 wird die Differenz ΔV zwischen der Geschwindigkeit des schnellsten Vorderrades VmaxVA und der Geschwindigkeit des langsamsten Hinterrades VminHA gebildet und im darauffolgenden Schritt 404 der Druck an beiden Hinterradbremsen abhängig von der Größe der Differenz ΔV gesteuert. Dabei wird bei Unterschreiten eines Sollwertbandes für die Differenz oder eines Sollwerts Druck aufgebaut, bei Überschreiten abgebaut, innerhalb des Sollwertbandes Druck gehalten.

Figur 8a zeigt die Geradeausfahrt, bei der die Geschwindigkeitsdifferenz zwischen dem langsamsten Hinterrad durch Bremsdrucksteuerung in beiden Hinterrädern auf einen Sollwert eingeregelt wird. Dies führt zu gleichen Bremskräften auf beiden Seiten.

In Figur 8b ist die Kurvenfahrt dargestellt, bei welcher erfindungsgemäß eine Individualregelung der Hinterradbremsen in Bezug auf das schnellste Vorderrad durchgeführt wird. Dabei stellt sich automatisch eine Druckdifferenz vom Kurvenaußenrad zum Kurveninnenrad ein und dabei unterschiedliche Bremskräfte FBKI und FBKA. Durch die daraus entstehende größere Bremskraft FBKA am kurvenäußeren Rad entsteht ein rückdrehendes Moment MBrems, welches dem Giermoment MGier entgegenwirkt.

Da das kurvenäußere Rad die Seitenführung übernimmt, muß dieses empfindlicher als das kurveninnere Rad auf einen Grenzwert der Geschwindigkeitsdifferenz zum schnellsten Vorderrad hin überwacht werden. Dies bedeutet, daß die Schwellwerte Δ1 bis Δ4 (bzw. Δ1 bis Δ3 im ersten Ausführungsbeispiel) abhängig von der Richtung der Kurve gewählt werden, wobei für das kurvenäußere Rad das Sollband (bzw. die Hysterese), in welchem der Bremsdruck gehalten wird, kleiner ist, als für das Kurveninnere. Bremsdruckaufbau bzw. -abbau erfolgt daher am kurvenäußeren Rad empfindlicher (Aufbau bei größerer Differenz, Abbau bei kleinerer Differenz) als am kurveninneren Rad.

Die erfindungsgemäße Lösung wurde am Beispiel einer Druckmittelbremsanlage beschrieben. Die entsprechende Lösung wird auch im Zusammenhang mit einer Bremsanlage mit elektromechanischer Zuspannung eingesetzt. Dabei wird statt Bremsdruck Bremskraft oder Bremsmoment durch Ansteuern von Elektromotoren aufgebaut, abgebaut oder gehalten.

Neben der Differenzbildung zwischen den Geschwindigkeiten der Hinterräder und dem schnellsten Vorderrad wird in einem anderen Ausführungsbeispiel die Differenz zu einer anderen Vorderradgeschwindigkeit, z.B. zu einem Mittelwert der Geschwindigkeiten der Vorderrädern, gebildet.

## Patentansprüche

1. Verfahren zur Steuerung der Bremskraftverteilung bei einem Fahrzeug zwischen Vorder- und Hinterachse, wobei die an den Hinterrädern auftretende Bremskraft abhängig von der Geschwindigkeit (VmaxVA) wenigstens eines Vorderrads verändert wird, **dadurch gekennzeichnet, dass** bei Kurvenfahrt für jedes Hinterrad einzeln die Differenz (ΔVL, ΔVR) zwischen der Geschwindigkeit (VHL, VHR) des Hinterrades und der Vorderradgeschwindigkeit (VmaxVA) mit Grenzwerten (Δ1-Δ4) verglichen wird und die Bremskraft an dem Hinterrad abhängig vom Über- oder Unterschreiten dieser Grenzwerten durch die Geschwindigkeitsdifferenz (ΔVR, ΔVL) gehalten, abgebaut oder aufgebaut wird.

2. Verfahren nach Anspruch 1, **dadurch gekennzeichnet, dass** während einer Kurvenfahrt die Grenzwerte für das kurvenäußere Rad und das kurveninnere Rad unterschiedlich sind, wobei ein Bremskraftabbau am kurvenäußeren Rad bei einer kleineren Geschwindigkeitsdifferenz als am kurveninneren Rad erfolgt.

3. Verfahren nach einem der vorhergehenden Ansprüche, **dadurch gekennzeichnet, dass** für jedes Hinterrad die Geschwindigkeitsdifferenz (ΔVL, ΔVR) die Differenz zwischen der Geschwindigkeit (VHL, VHR) des jeweiligen Hinterrades und dem schnellsten Vorderrad (VmaxVA) ist.

4. Verfahren nach Anspruch 3, **dadurch gekennzeichnet, dass** abhängig von der Geschwindigkeitsdifferenz Wertebereiche für die Geschwindigkeitsdifferenz vorgegeben sind, wobei in einem ersten Wertebereich (Δ2-Δ3; Δ3-Δ4) Bremskraft aufgebaut, in einem zweiten (Δ2-Δ1; Δ3-Δ2) die Bremskraft gehalten und oberhalb des zweiten die Bremskraft abgebaut wird.

5. Verfahren nach Anspruch 4, **dadurch gekennzeichnet, dass** bei Geschwindigkeitsdifferenzen kleiner als der zweite Bereich in einem ersten Geschwidigkeitsdifferenzenbereich (Δ3-Δ3') ein langsamer Bremskraftaufbau, in einem zweiten (Δ3'- Δ4) ein schnellerer Aufbau erfolgt.

6. Verfahren nach Anspruch 4, **dadurch gekennzeichnet, dass** in einem Wertebereich bei Geschwindigkeitsdifferenzen kleiner als der Grenzwert (Δ4) für den ersten Wertebereich der Bremsdruckaufbau so schnell wie möglich erfolgt.

7. Vorrichtung zur Steuerung der Bremskraftverteilung bei einem Fahrzeug zwischen Vorder- und Hinterachse, mit einer Steuereinheit (10), die die an den Hinterrädern auftretende Bremskraft abhängig von der Geschwindigkeit (VmaxVA) wenigstens eines Vorderrads verändert, **dadurch gekennzeichnet, dass** die Steuereinheit (10) Mittel umfasst, die bei Kurvenfahrt für jedes Hinterrad einzeln die Differenz (ΔVL, ΔVR) zwischen der Geschwindigkeit (VHL, VHR) des Hinterrades und einer Vorderradgeschwindigkeit (VmaxVA) mit Grenzwerten (Δ1-Δ4) vergleichen und die Bremskraft an dem Hinterrad abhängig vom Über- oder Unterschreiten dieser Grenzwerten durch die Geschwindigkeitsdifferenz (ΔVR, ΔVL) halten, abbauen oder aufbauen.

8. Vorrichtung nach Anspruch 7, **dadurch gekennzeichnet, dass** die Bremsanlage eine hydraulische, eine pneumatische, eine elektrisch gesteuerte Bremsanlage oder eine Bremsanlage mit elektromotorischer Zuspannung ist.

## Claims

1. Method for controlling the proportioning of braking force in a vehicle between the front and rear axles, the braking force occurring at the rear wheels being changed as a function of the speed (VmaxVA) of at least one front wheel, **characterized in that**, during cornering, the difference (ΔVL, ΔVR) between the speed (VHL, VHR) of the rear wheel and the front wheel speed (VmaxVA) is compared with limiting values (Δ1-Δ4) individually for each rear wheel, and the braking force at the rear wheel is maintained, decreased or increased as a function of these limiting values being exceeded or undershot by the speed difference (ΔVR, ΔVL).

2. Method according to Claim 1, **characterized in that**, during cornering, the limiting values for the wheel on the outside of the bend and the wheel on the inside of the bend are different, a decrease in braking force at the wheel on the outside of the bend taking place at a smaller speed difference than at the wheel on the inside of the bend.

3. Method according to one of the preceding claims, **characterized in that**, for each rear wheel, the speed difference (ΔVL, ΔVR) is the difference between the speed (VHL, VHR) of the respective rear wheel and the fastest front wheel (VmaxVA).

4. Method according to Claim 3, **characterized in that** value ranges for the speed difference are predefined as a function of the speed difference, braking force being increased in a first value range (Δ2-Δ3; Δ3-Δ4) and being maintained in a second value range (Δ2-Δ1; Δ3-Δ2) and the braking force being decreased above the second value range.

5. Method according to Claim 4, **characterized in that**, in the case of speed differences lower than the second range, a slow increase in braking force takes place in a first speed difference range (Δ3-Δ3'), and a faster increase takes place in a second speed difference range (Δ3'-Δ4).

6. Method according to Claim 4, **characterized in that** the increase in braking pressure takes place as quickly as possible in a value range when there are speed differences smaller than the limiting value (Δ4) for the first value range.

7. Device for controlling the proportioning of braking force in a vehicle between the front and rear axles, having a control unit (10) which changes the braking force occurring at the rear wheels as a function of the speed (VmaxVA) of at least one front wheel, **characterized in that** the control unit (10) comprises means which compare the difference (ΔVL, ΔVR) between the speed (VHL, VHR) of the rear wheel and a front wheel speed (VmaxVA) with limiting values (Δ1-Δ4) individually for each rear wheel and maintain, decrease or increase the braking force at the rear wheel as a function of these limiting values being exceeded or undershot by the speed difference (ΔVR, ΔVL).

8. Device according to Claim 7, **characterized in that** the brake system is a hydraulic, pneumatic or electrically controlled brake system or a brake system with electromotive application of the brakes.

## Revendications

1. Procédé de commande de la répartition de la force de freinage entre l'essieu avant et l'essieu arrière d'un véhicule, selon lequel on modifie la force de freinage au niveau des roues arrières en fonction de la vitesse (VmaxVA) d'au moins une roue avant,
**caractérisé en ce que**
dans le trajet en courbe, pour chaque roue arrière, on compare séparément la différence (ΔVL, ΔVR) entre la vitesse (VHL, VHR) de la roue arrière et la vitesse de la roue avant (VmaxVA) avec des valeurs limites (Δ1-Δ4) et on maintient, on diminue ou on augmente la force de frein de la roue arrière en fonction du dépassement vers le haut ou vers le bas de ces valeurs limites par la différence de vitesse (ΔVR, ΔVL).

2. Procédé selon la revendication 1,
**caractérisé en ce que**
pendant le trajet en courbe, les valeurs limites de la roue extérieure à la courbe et celles de la roue intérieure à la courbe sont différentes et on diminue la force de frein de la roue extérieure à la courbe pour une petite différence de vitesse, par rapport à la roue intérieure à la courbe.

3. Procédé selon l'une revendications précédentes,
**caractérisé en ce que**
pour chaque roue arrière la différence de vitesse (ΔVL, ΔVR) est la différence entre la vitesse (VHL, VHR) de la roue arrière respective et la roue avant la plus rapide (VmaxVA).

4. Procédé selon la revendication 3,
**caractérisé en ce qu'**
en fonction de la différence de vitesse on prédétermine des plages de valeur pour la différence de vitesse et dans une première plage de valeur (Δ2-Δ3 ; Δ3-Δ4) on augmente la force de freinage ; dans la seconde plage (Δ2-Δ1 ; Δ3-Δ2) on maintient la force de freinage et au-dessus de la seconde plage on diminue la force de freinage.

5. Procédé selon la revendication 4,
**caractérisé en ce que**
pour des différences de vitesse inférieures à la seconde plage, dans une première plage de différence de vitesse (Δ3-Δ3'), on aura une augmentation plus lente de la force de freinage, et dans une seconde plage (Δ3'-Δ4) on aura une augmentation plus rapide.

6. Procédé selon la revendication 4,
**caractérisé en ce que**
dans une plage de valeur pour laquelle les différences de vitesse sont inférieures à la valeur limite (Δ4), pour la première plage de valeurs, l'augmentation de la pression de freinage sera aussi rapide que possible.

7. Dispositif de commande de la répartition de la force de freinage entre l'essieu avant et l'essieu arrière d'un véhicule comportant une unité de commande (10) qui modifie la force de freinage produite sur les roues arrières en fonction de la vitesse (VmaxVA) d'au moins une roue avant,
**caractérisé en ce que**
l'unité de commande (10) comprend des moyens qui en cas de trajet en courbe compare pour chaque roue arrière, séparément, la différence (ΔVL, ΔVR) entre la vitesse (VHL, VHR) de la roue arrière et une vitesse de roue avant (VmaxVA) avec des limites (Δ1-Δ4) et maintient, diminue ou augmente la force de freinage de la roue arrière en fonction du dépassement vers le haut ou vers le bas des valeurs limites par la différence de vitesse (ΔVR, ΔVL).

8. Dispositif selon la revendication 7,
**caractérisé en ce que**
l'installation de freinage est une installation de freinage à commande hydraulique, pneumatique ou électrique ou une installation de freinage à serrage par un moteur électrique.
